(19) Europäisches Patentamt
European Patent Office
Office européen des brevets

(11) **EP 4 276 709 A1**

(12) **EUROPEAN PATENT APPLICATION**

(43) Date of publication:
**15.11.2023 Bulletin 2023/46**

(21) Application number: **22203312.8**

(22) Date of filing: **24.10.2022**

(51) International Patent Classification (IPC):
**G06N 20/00** (2019.01)      **G06F 9/48** (2006.01)
**G06N 3/04** (2023.01)      **G06N 3/084** (2023.01)

(52) Cooperative Patent Classification (CPC):
**G06F 9/485; G06N 20/00;** G06N 3/04; G06N 3/084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2021 US 202117518855**

(71) Applicant: **UiPath, Inc.**
**New York, NY 10016 (US)**

(72) Inventors:
• **McGonnell, Anton**
**Seattle, WA (US)**
• **Hidalgo, Marco Alban**
**Redmond, WA (US)**
• **Singh, Prabhdeep**
**Bellevue, WA (US)**

(74) Representative: **V.O.**
**P.O. Box 87930**
**Carnegieplein 5**
**2508 DH Den Haag (NL)**

Remarks:
Claims 16-28 are deemed to be abandoned due to non-payment of the claims fees (Rule 45(3) EPC).

(54) **BUILDING AND MANAGING ARTIFICIAL INTELLIGENCE FLOWS USING LONG-RUNNING WORKFLOWS FOR ROBOTIC PROCESS AUTOMATION**

(57) Using long-running workflows with artificial intelligence flows to manage the training/retraining lifecycle of artificial intelligence (AI) / machine learning (ML) models is disclosed. Validation may be desired when an AI/ML model is called by a robotic process automation (RPA) robot executing the long-running workflow. This validation includes dynamic input from users. The RPA robot receives the dynamic input from the users and uses this data for training a replacement AI/ML model or retraining the called AI/ML model. The state of the long-running workflow may be preserved, both in training and serving. Long-running workflows may be used to keep track of where the current execution is in the ML model lifecycle.

FIG. 8A

EP 4 276 709 A1

**Description**

FIELD

The present invention generally relates to artificial intelligence (AI) and machine learning (ML), and more specifically, to using long-running workflows with AI flows to manage the training/retraining lifecycle of AI/ML models.

BACKGROUND

Current AI tools, such as Google AutoML® and Azure® ML, essentially look like a workflow. A set of operations are provided in these systems that are called pipelines. This functionality provides capabilities such as data transformation, tabular data preparation, binning, and clustering. These are basic operations that a user can drag-and-drop onto a workplace and visually pipe in the data from one component to another. An example includes tabular data preparation, where data is pumped into a binning system that takes in the values in the tabular data, bins them into separate classes, and then on to the actual model trainer.

However, dynamic input for AI/ML models is not provided with these tools. Accordingly, an improved approach may be beneficial.

SUMMARY

Certain embodiments of the present invention may provide solutions to the problems and needs in the art that have not yet been fully identified, appreciated, or solved by current AI technologies. For example, some embodiments of the present invention pertain to using long-running workflows with AI flows to manage the training/retraining lifecycle of AI/ML models.

In an embodiment, a system includes a current AI/ML model running on a computing system. The system also includes an RPA robot running on the same computing system as the current AI/ML model or on a different computing system. The RPA robot is configured to execute a long-running workflow including an AI flow that calls the current AI/ML model. When a call is made to the current AI/ML model by the RPA robot and a confidence associated with the AI/ML model is below a human validation threshold, the RPA robot is configured to suspend execution of the long-running workflow and wait for dynamic input pertaining to the human validation, collect the dynamic input from the human validation, which includes training data, and continue execution of the long-running workflow after receiving the dynamic input.

In another embodiment, a non-transitory computer-readable medium stores a computer program. The computer program is configured to cause at least one processor to execute a long-running workflow including an AI flow that calls a current AI/ML model and determine a confidence associated with the current AI/ML model. When the confidence associated with the AI/ML model is below a human validation threshold, the computer program is configured to cause the at least one processor to suspend execution of the long-running workflow and wait for dynamic input pertaining to the human validation, collect the dynamic input from the human validation, which includes training data, and continue execution of the long-running workflow after receiving the dynamic input.

In yet another embodiment, a computing system includes memory storing computer program instructions for executing a long-running workflow including an AI flow that calls a current AI/ML model. The computing system also includes at least one processor configured to execute the computer program instructions. The computer program instructions are configured to cause the at least one processor to determine a confidence associated with the current AI/ML model. When the confidence associated with the AI/ML model is below a human validation threshold, the computer program instructions are configured to cause the at least one processor to suspend execution of the long-running workflow and wait for dynamic input pertaining to the human validation and collect the dynamic input from the human validation. The dynamic input includes training data.

BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:

FIG. 1 is an architectural diagram illustrating an RPA system, according to an embodiment of the present invention.
FIG. 2 is an architectural diagram illustrating a deployed RPA system, according to an embodiment of the present invention.

FIG. 3 is an architectural diagram illustrating the relationship between a designer, activities, and drivers, according to an embodiment of the present invention.

FIG. 4 is an architectural diagram illustrating an RPA system, according to an embodiment of the present invention.

FIG. 5 is an architectural diagram illustrating a computing system configured to use long-running workflows to build and manage AI flows, according to an embodiment of the present invention.

FIG. 6A illustrates an example of a neural network that has been trained to recognize graphical elements in an image, according to an embodiment of the present invention.

FIG. 6B illustrates an example of a neuron, according to an embodiment of the present invention.

FIG. 7 illustrates a user interface of an AI skills studio, according to an embodiment of the present invention.

FIGS. 8A and 8B illustrate a design view of a process designer of a conductor application, according to an embodiment of the present invention.

FIG. 8C illustrates a design view of the process designer of the conductor application, according to an embodiment of the present invention.

FIG. 9 is an architectural diagram illustrating a system configured to use long-running workflows to build and manage AI flows, according to an embodiment of the present invention.

FIG. 10 is a flow diagram illustrating the flow of an example long-running workflow that uses AI, according to an embodiment of the present invention.

FIG. 11 is a flowchart illustrating a process for using long-running workflows to build and manage AI flows, according to an embodiment of the present invention.

Unless otherwise indicated, similar reference characters denote corresponding features consistently throughout the attached drawings.

## DETAILED DESCRIPTION OF THE EMBODIMENTS

Some embodiments pertain to using long-running workflows with AI flows to manage the training/retraining lifecycle of artificial intelligence (AI) / machine learning (ML) models. Validation may be desired when an AI/ML model is called by a robotic process automation (RPA) robot executing the long-running workflow. This validation includes dynamic input from users. The RPA robot receives the dynamic input from the users and uses this data for training a replacement AI/ML model or retraining the called AI/ML model. The state of the long-running workflow may be preserved, both in training and serving. Long-running workflows may be used to keep track of where the current execution is in the pipeline.

Long-running workflows for RPA in some embodiments are master projects that support service orchestration, human intervention, and long-running transactions in unattended environments. Human intervention comes into play when certain processes require human inputs to handle exceptions, approvals, or validation before proceeding to the next step in the activity. In this situation, the process execution is suspended, freeing up the RPA robots until the human task completes.

A long-running workflow may support workflow fragmentation via persistence activities and may be combined with invoke process and non-user interaction activities, orchestrating human tasks with RPA robot tasks. The long-running workflow may run in a session to facilitate speedy execution. In some embodiments, long-running workflows may orchestrate background processes that may contain activities performing Application Programming Interface (API) calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

In some embodiments, the ML process is itself a workflow. The steps in the AI/ML model lifecycle, from initial training, to running the initially trained AI/ML model, to retraining, to serving operation with the retrained AI/ML model, to returning a drifting AI/ML model to the human validation and training phase, etc. can be tracked so the system knows where it is in the AI/ML process. For instance, in some embodiments, if an AI/ML model training/retraining long-running workflow is being executed by an RPA robot, the state of the long-running workflow may be saved periodically and/or based on some trigger (e.g., a task being accomplished, an AI/ML model update, etc.). If a computing system performing the training/retraining is powered off or crashes, the training/retraining may resume from this saved state after the computing system is booted back up or recovers. Each training or retraining phase may have multiple steps/states as the AI/ML model is trained to accomplish a certain objective, receives human guidance, training resumes, more human guidance is received, etc.

Such embodiments may run in a somewhat analogous manner to a finite state machine (FSM). The system tracks which step in the flow that an RPA robot is in, whether a given step or activity can be automated, whether user input is required, etc. Retraining of AI/ML models may be an asynchronous process where retraining is performed without taking RPA robots or other processes calling the AI/ML models down. When a version of an AI/ML model is trained that has superior performance to a currently deployed version of the AI/ML model, the superior version of the AI/ML model may be swapped in and used to serve calling RPA robots/processes. This may occur without providing information to the RPA robot/process that the swap occurred.

In some embodiments, all information that is needed for a retraining pipeline may be preserved. This may include the inputs/outputs for the AI/ML model, the steps in the retraining pipeline, labeled corrections provided by human reviewers, etc. As such, the system may track the location in the flow across the entire ML lifecycle.

Such state-saving may be useful for many scenarios. Consider a case where a server is not available for retraining or during retraining, the server is tasked with performing higher priority processes. Also consider a case where automated processes require a manager's input, where that manager is a bottleneck and processes need to wait for approval. Multiple processes can thus get hung up at the same choke point. Other scenarios where the AI/ML model may stop and wait may include, but are not limited to, when data or model drift is detected beyond a threshold, if a new scenario is detected with an unproven confidence (e.g., an AI/ML model providing computer vision for a self-driving car begins to detect street signs, but the detection confidence is not yet high enough for use in production to replace another AI/ML model that operates using a different mechanism, such as GPS maps), etc.

In data science flows, an AI center system, such as AI Center™ by UiPath®, may be used in the serving phase, training phase, and retraining phase. Some embodiments further allow users to build customized data pipelines where long-running workflows can be used for these phases. Such embodiments may facilitate data preparation, featurization, model building, model retraining, model serving, and long-running workflows. Training an AI/ML model can take some time and it is often not desirable for users to shut down the AI/ML model that is being served as instance operators are being trained. For instance, if an AI/ML model is being trained to use a different mechanism than an existing AI/ML model, but the performance of the new AI/ML model is not yet acceptable, instances of the new AI/ML model may be saved, tracked, and retrained until the new AI/ML model is sufficient for production deployment. For this reason, some embodiments perform and track state-full changes across different components. For instance, full information regarding where the AI/ML model is in the pipeline may be saved.

RPA workflow tools such as an RPA designer application may be used in some embodiments to include long-running workflows to build and manage AI flows. For example, an optical character recognition (OCR) activity could take documents from a File Transfer Protocol (FTP) location, digitize the documents using OCR, and then pump the digitized documents into a downstream activity. This downstream activity may perform extraction or store the data for later processing, such as entity definition. This system may be more flexible and not constrained be to only a function exposed by conventional AI frameworks. This flexibility may arise, in part, since each set of functions may be its own AI/ML model or a rule-based system in some embodiments. Conventionally, all AI/ML models are run as a monolithic unit. However, in some embodiments, individual AI/ML models in a chain or pipeline of AI/ML models may be swapped out to fit new scenarios. For instance, an AI/ML model for performing English OCR may be swapped out for one performing Japanese OCR to process invoices in Japanese. Validation steps may be generated that are custom to each type of document in some embodiments. For instance, processing an invoice may require different validation logic than processing a purchase order.

Completing a feedback loop with the validation via human-in-the-loop is a difficult step in AI systems. It is often not known how much data should be collected from humans for the collected data to properly train/retrain an AI/ML model. For instance, if the human reviewers are inaccurate, more data is required to train/retrain the AI/ML model since bad examples are included in the training data. Also, the type of the data may not be known. In one real world example, a red spigot on a ship was labeled by reviewers who had been on a ship before or otherwise knew what it was as a fire hydrant. However, other reviewers who had never encountered the spigot before incorrectly labeled the spigot as a faucet.

Conventional AI frameworks are single-pass model generators. The AI/ML model can be retrained by doing transfer learning, locking the parameters again, and pumping in a new batch of data. However, this is a time-consuming manual process that these systems cannot perform automatically.

Some embodiments employ long-running workflows and human-in-the-loop validation that complete the feedback loop. RPA can be used to set up arbitrary rules. For example, a company may not want to put an AI/ML model into production if the confidence score of the AI/ML model is below 90%, or a company may want to rely on the AI/ML model alone in production if the confidence score falls below 90%. Such rules can be set up in an RPA workflow and can govern whether the AI/ML model should be put into production. Furthermore, in some embodiments, AI/ML models, rule sets, and criteria for deployment or retraining can be chained together to provide more flexibility.

In some embodiments, after the RPA robot(s) implementing the long-running workflow including the AI flow receive human validation results, such as elements on a screen where corrections were made and where the human validated what the AI/ML model predicted, these results can be stored for retraining of the AI/ML model. The complexity may not be exposed to the user in some embodiments, but the long-running workflow logic ensures that in the same schema, the AI/ML model is marked for retraining. Each new datapoint validated by human reviewers can be used to automatically update and improve the AI/ML model. Retraining may be performed periodically after a period of time passes, after a certain amount of data is collected, started manually by a data scientist, any combination of these, etc.

Consider the example of email classification. Emails may be automatically assigned specific categories by an AI/ML model that has been trained to do so. An RPA robot may parse an email and send the email contents (e.g., sender, recipient(s), subject, body text, etc.) to the AI/ML model, which returns a classification, such as a product inquiry, a customer complaint about a credit card charge, etc. If the confidence score of the AI/ML model is below a certain human review threshold, the email and predicted classification may be sent to a human reviewer. The human reviewer can then read the email and choose to keep the classification or correct it. Both positive and negative examples may be stored and used for retraining of the AI/ML model. If the confidence score of the AI/ML model exceeds the human review threshold, the AI/ML model may run automatically without human input. An RPA robot or some other process may continue to monitor the performance of the AI/ML model and reinstate human review if the accuracy of the AI/ML model falls below the human review threshold over time (e.g., due to data drift or concept drift).

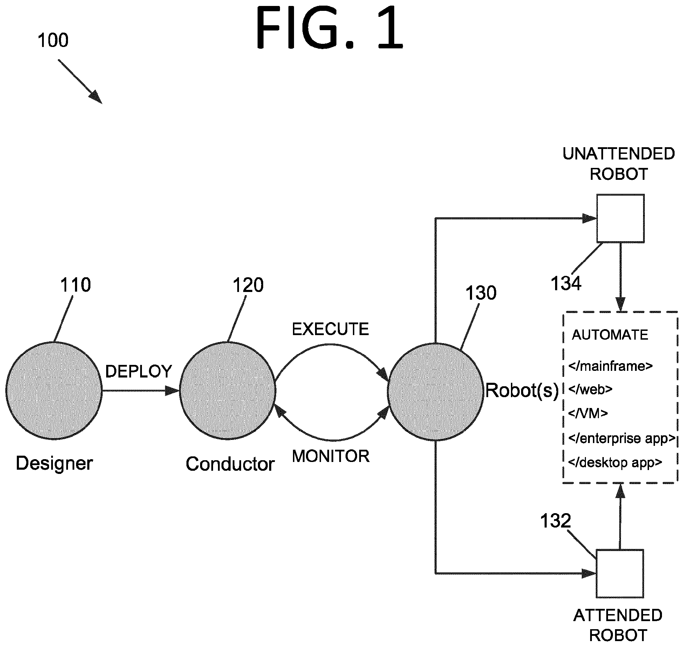

FIG. 1 is an architectural diagram illustrating an RPA system 100, according to an embodiment of the present invention. RPA system 100 includes a designer 110 that allows a developer to design and implement workflows. Designer 110 may provide a solution for application integration, as well as automating third-party applications, administrative Information Technology (IT) tasks, and business IT processes. Designer 110 may facilitate development of an automation project, which is a graphical representation of a business process. Simply put, designer 110 facilitates the development and deployment of workflows and robots.

The automation project enables automation of rule-based processes by giving the developer control of the execution order and the relationship between a custom set of steps developed in a workflow, defined herein as "activities." One commercial example of an embodiment of designer 110 is UiPath Studio™. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 110, execution of business processes is orchestrated by conductor 120, which orchestrates one or more robots 130 that execute the workflows developed in designer 110. One commercial example of an embodiment of conductor 120 is UiPath Orchestrator™. Conductor 120 facilitates management of the creation, monitoring, and deployment of resources in an environment. Conductor 120 may act as an integration point with third-party solutions and applications.

Conductor 120 may manage a fleet of robots 130, connecting and executing robots 130 from a centralized point. Types of robots 130 that may be managed include, but are not limited to, attended robots 132, unattended robots 134, development robots (similar to unattended robots 134, but used for development and testing purposes), and nonproduction robots (similar to attended robots 132, but used for development and testing purposes). Attended robots 132 are triggered by user events and operate alongside a human on the same computing system. Attended robots 132 may be used with conductor 120 for a centralized process deployment and logging medium. Attended robots 132 may help the human user accomplish various tasks, and may be triggered by user events. In some embodiments, processes cannot be started from conductor 120 on this type of robot and/or they cannot run under a locked screen. In certain embodiments, attended robots 132 can only be started from a robot tray or from a command prompt. Attended robots 132 should run under human supervision in some embodiments.

Unattended robots 134 run unattended in virtual environments and can automate many processes. Unattended robots 134 may be responsible for remote execution, monitoring, scheduling, and providing support for work queues. Debugging for all robot types may be run in designer 110 in some embodiments. Both attended and unattended robots may automate various systems and applications including, but not limited to, mainframes, web applications, VMs, enterprise applications (e.g., those produced by SAP®, SalesForce®, Oracle®, etc.), and computing system applications (e.g., desktop and laptop applications, mobile device applications, wearable computer applications, etc.).

Conductor 120 may have various capabilities including, but not limited to, provisioning, deployment, configuration, queueing, monitoring, logging, and/or providing interconnectivity. Provisioning may include creating and maintenance of connections between robots 130 and conductor 120 (e.g., a web application). Deployment may include assuring the correct delivery of package versions to assigned robots 130 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., an SQL database) and/or another storage mechanism (e.g., ElasticSearch®, which provides the ability to store and quickly query large datasets). Conductor 120 may provide interconnectivity by acting as the centralized point of communication for third-party solutions and/or applications.

Robots 130 are execution agents that run workflows built in designer 110. One commercial example of some embodiments of robot(s) 130 is UiPath Robots™. In some embodiments, robots 130 install the Microsoft Windows® Service Control Manager (SCM)-managed service by default. As a result, such robots 130 can open interactive Windows® sessions under the local system account, and have the rights of a Windows® service.

In some embodiments, robots 130 can be installed in a user mode. For such robots 130, this means they have the same rights as the user under which a given robot 130 has been installed. This feature may also be available for High Density (HD) robots, which ensure full utilization of each machine at its maximum potential. In some embodiments, any type of robot 130 may be configured in an HD environment.

Robots 130 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows® sessions and act as a proxy between conductor 120 and the execution hosts (i.e., the computing systems on which robots 130 are executed). These services are trusted with and manage the credentials for robots 130. A console application is launched by the SCM under the local system.

User mode robot services in some embodiments manage and monitor Windows® sessions and act as a proxy between conductor 120 and the execution hosts. User mode robot services may be trusted with and manage the credentials for robots 130. A Windows® application may automatically be launched if the SCM-managed robot service is not installed.

Executors may run given jobs under a Windows® session (i.e., they may execute workflows. Executors may be aware of per-monitor dots per inch (DPI) settings. Agents may be Windows® Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 130 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 110 may also be independent of browser zoom level in some embodiments. For applications that are DPI-unaware or intentionally marked as unaware, DPI may be disabled in some embodiments.

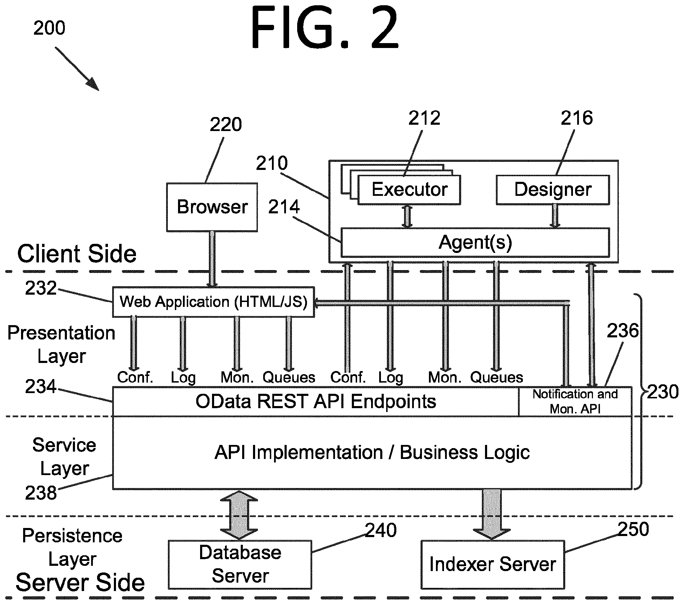

FIG. 2 is an architectural diagram illustrating a deployed RPA system 200, according to an embodiment of the present invention. In some embodiments, RPA system 200 may be, or may be a part of, RPA system 100 of FIG. 1. It should be noted that the client side, the server side, or both, may include any desired number of computing systems without deviating from the scope of the invention. On the client side, a robot application 210 includes executors 212, an agent 214, and a designer 216. However, in some embodiments, designer 216 may not be running on computing system 210. Executors 212 are running processes. Several business projects may run simultaneously, as shown in FIG. 2. Agent 214 (e.g., a Windows® service) is the single point of contact for all executors 212 in this embodiment. All messages in this embodiment are logged into conductor 230, which processes them further via database server 240, indexer server 250, or both. As discussed above with respect to FIG. 1, executors 212 may be robot components.

In some embodiments, a robot represents an association between a machine name and a username. The robot may manage multiple executors at the same time. On computing systems that support multiple interactive sessions running simultaneously (e.g., Windows® Server 2012), multiple robots may be running at the same time, each in a separate Windows® session using a unique username. This is referred to as HD robots above.

Agent 214 is also responsible for sending the status of the robot (e.g., periodically sending a "heartbeat" message indicating that the robot is still functioning) and downloading the required version of the package to be executed. The communication between agent 214 and conductor 230 is always initiated by agent 214 in some embodiments. In the notification scenario, agent 214 may open a WebSocket channel that is later used by conductor 230 to send commands to the robot (e.g., start, stop, etc.).

On the server side, a presentation layer (web application 232, Open Data Protocol (OData) Representative State Transfer (REST) Application Programming Interface (API) endpoints 234, and notification and monitoring 236), a service layer (API implementation / business logic 238), and a persistence layer (database server 240 and indexer server 250) are included. Conductor 230 includes web application 232, OData REST API endpoints 234, notification and monitoring 236, and API implementation / business logic 238. In some embodiments, most actions that a user performs in the interface of conductor 230 (e.g., via browser 220) are performed by calling various APIs. Such actions may include, but are not limited to, starting jobs on robots, adding/removing data in queues, scheduling jobs to run unattended, etc. without deviating from the scope of the invention. Web application 232 is the visual layer of the server platform. In this embodiment, web application 232 uses Hypertext Markup Language (HTML) and JavaScript (JS). However, any desired markup languages, script languages, or any other formats may be used without deviating from the scope of the invention. The user interacts with web pages from web application 232 via browser 220 in this embodiment in order to perform various actions to control conductor 230. For instance, the user may create robot groups, assign packages to the robots, analyze logs per robot and/or per process, start and stop robots, etc.

In addition to web application 232, conductor 230 also includes service layer that exposes OData REST API endpoints 234. However, other endpoints may be included without deviating from the scope of the invention. The REST API is consumed by both web application 232 and agent 214. Agent 214 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 230. Queueing REST endpoints may be responsible for queues and queue item management, such as adding data to a queue, obtaining a transaction from the queue, setting the status of a transaction, etc.

Monitoring REST endpoints may monitor web application 232 and agent 214. Notification and monitoring API 236 may be REST endpoints that are used for registering agent 214, delivering configuration settings to agent 214, and for sending/receiving notifications from the server and agent 214. Notification and monitoring API 236 may also use WebSocket communication in some embodiments.

The persistence layer includes a pair of servers in this embodiment - database server 240 (e.g., a SQL server) and indexer server 250. Database server 240 in this embodiment stores the configurations of the robots, robot groups, associated processes, users, roles, schedules, etc. This information is managed through web application 232 in some embodiments. Database server 240 may manages queues and queue items. In some embodiments, database server 240 may store messages logged by the robots (in addition to or in lieu of indexer server 250).

Indexer server 250, which is optional in some embodiments, stores and indexes the information logged by the robots. In certain embodiments, indexer server 250 may be disabled through configuration settings. In some embodiments, indexer server 250 uses ElasticSearch®, which is an open source project full-text search engine. Messages logged by robots (e.g., using activities like log message or write line) may be sent through the logging REST endpoint(s) to indexer server 250, where they are indexed for future utilization.

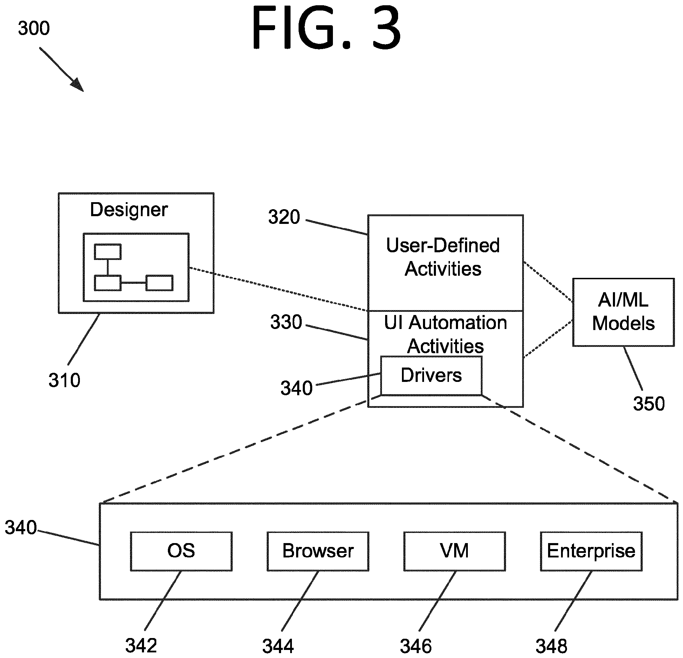

FIG. 3 is an architectural diagram illustrating the relationship 300 between a designer 310, activities 320, 330, drivers 340, and AI/ML models 350, according to an embodiment of the present invention. Per the above, a developer uses designer 310 to develop workflows that are executed by robots. Workflows may include user-defined activities 320 and UI automation activities 330. User-defined activities 320 and/or UI automation activities 330 may call one or more AI/ML models 350 in some embodiments, which may be located locally to the computing system on which the robot is operating and/or remotely thereto. Some embodiments are able to identify non-textual visual components in an image, which is called computer vision (CV) herein. Some CV activities pertaining to such components may include, but are not limited to, click, type, get text, hover, element exists, refresh scope, highlight, etc. Click in some embodiments identifies an element using CV, optical character recognition (OCR), fuzzy text matching, and multi-anchor, for example, and clicks it. Type may identify an element using the above and types in the element. Get text may identify the location of specific text and scan it using OCR. Hover may identify an element and hover over it. Element exists may check whether an element exists on the screen using the techniques described above. In some embodiments, there may be hundreds or even thousands of activities that can be implemented in designer 310. However, any number and/or type of activities may be available without deviating from the scope of the invention.

UI automation activities 330 are a subset of special, lower level activities that are written in lower level code (e.g., CV activities) and facilitate interactions with the screen. UI automation activities 330 facilitate these interactions via drivers 340 and/or AI/ML models 350 that allow the robot to interact with the desired software. For instance, drivers 340 may include OS drivers 342, browser drivers 344, VM drivers 346, enterprise application drivers 348, etc. One or more of AI/ML models 350 may be used by UI automation activities 330 in order to perform interactions with the computing system. In some embodiments, AI/ML models 350 may augment drivers 340 or replace them completely. Indeed, in certain embodiments, drivers 340 are not included.

Drivers 340 may interact with the OS at a low level looking for hooks, monitoring for keys, etc. They may facilitate integration with Chrome®, IE®, Citrix®, SAP®, etc. For instance, the "click" activity performs the same role in these different applications via drivers 340.

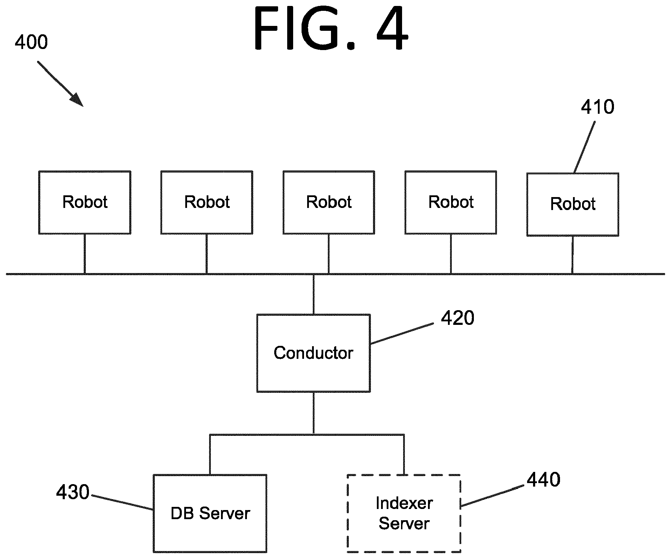

FIG. 4 is an architectural diagram illustrating an RPA system 400, according to an embodiment of the present invention. In some embodiments, RPA system 400 may be or include RPA systems 100 and/or 200 of FIGS. 1 and/or 2. RPA system 400 includes multiple client computing systems 410 running robots. Computing systems 410 are able to communicate with a conductor computing system 420 via a web application running thereon. Conductor computing system 420, in turn, is able to communicate with a database server 430 and an optional indexer server 440.

With respect to FIGS. 1 and 3, it should be noted that while a web application is used in these embodiments, any suitable client/server software may be used without deviating from the scope of the invention. For instance, the conductor may run a server-side application that communicates with non-web-based client software applications on the client computing systems.

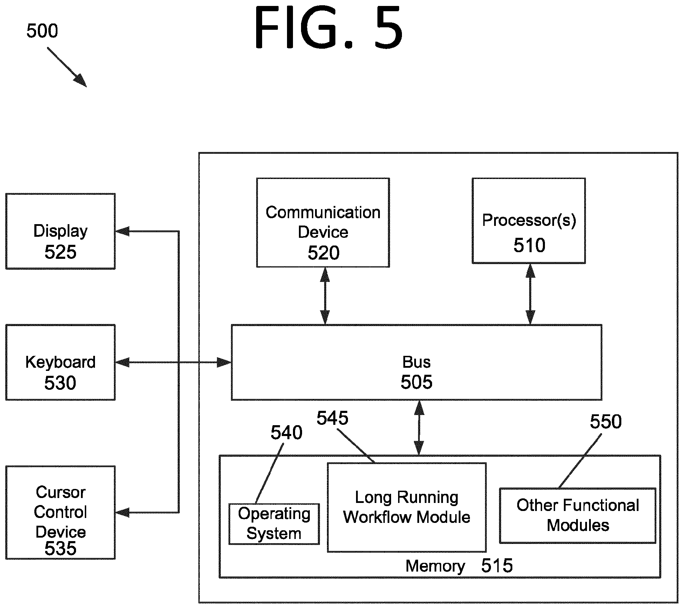

FIG. 5 is an architectural diagram illustrating a computing system 500 configured to use long-running workflows to build and manage AI flows, according to an embodiment of the present invention. In some embodiments, computing system 500 may be one or more of the computing systems depicted and/or described herein. Computing system 500 includes a bus 505 or other communication mechanism for communicating information, and processor(s) 510 coupled to bus 505 for processing information. Processor(s) 510 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 510 may also have multiple processing cores, and at least some of the cores may be configured to perform specific functions. Multi-parallel processing may be used in some embodiments. In certain embodiments, at least one of processor(s) 510 may be a neuromorphic circuit that includes processing elements that mimic biological neurons. In some embodiments, neuromorphic circuits may not require the typical components of a Von Neumann computing architecture.

Computing system 500 further includes a memory 515 for storing information and instructions to be executed by processor(s) 510. Memory 515 can be comprised of any combination of Random Access Memory (RAM), Read Only Memory (ROM), flash memory, cache, static storage such as a magnetic or optical disk, or any other types of non-transitory computer-readable media or combinations thereof. Non-transitory computer-readable media may be any available media that can be accessed by processor(s) 510 and may include volatile media, non-volatile media, or both. The media may also be removable, non-removable, or both.

Additionally, computing system 500 includes a communication device 520, such as a transceiver, to provide access to a communications network via a wireless and/or wired connection. In some embodiments, communication device 520 may be configured to use Frequency Division Multiple Access (FDMA), Single Carrier FDMA (SC-FDMA), Time Division Multiple Access (TDMA), Code Division Multiple Access (CDMA), Orthogonal Frequency Division Multiplexing (OFDM), Orthogonal Frequency Division Multiple Access (OFDMA), Global System for Mobile (GSM) communications, General Packet Radio Service (GPRS), Universal Mobile Telecommunications System (UMTS), cdma2000, Wideband CDMA (W-CDMA), High-Speed Downlink Packet Access (HSDPA), High-Speed Uplink Packet Access (HSUPA), High-Speed Packet Access (HSPA), Long Term Evolution (LTE), LTE Advanced (LTE-A), 802.1 1x, Wi-Fi, Zigbee, Ultra-WideBand (UWB), 802.16x, 802.15, Home Node-B (HnB), Bluetooth, Radio Frequency Identification (RFID), Infrared Data Association (IrDA), Near-Field Communications (NFC), fifth generation (5G), New Radio (NR), any combination thereof, and/or any other currently existing or future-implemented communications standard and/or protocol without deviating from the scope of the invention. In some embodiments, communication device 520 may include one or more antennas that are singular, arrayed, phased, switched, beamforming, beamsteering, a combination thereof, and or any other antenna configuration without deviating from the scope of the invention.

Processor(s) 510 are further coupled via bus 505 to a display 525, such as a plasma display, a Liquid Crystal Display (LCD), a Light Emitting Diode (LED) display, a Field Emission Display (FED), an Organic Light Emitting Diode (OLED) display, a flexible OLED display, a flexible substrate display, a projection display, a 4K display, a high definition display, a Retina® display, an In-Plane Switching (IPS) display, or any other suitable display for displaying information to a user. Display 525 may be configured as a touch (haptic) display, a three dimensional (3D) touch display, a multi-input touch display, a multi-touch display, etc. using resistive, capacitive, surface-acoustic wave (SAW) capacitive, infrared, optical imaging, dispersive signal technology, acoustic pulse recognition, frustrated total internal reflection, etc. Any suitable display device and haptic I/O may be used without deviating from the scope of the invention.

A keyboard 530 and a cursor control device 535, such as a computer mouse, a touchpad, etc., are further coupled to bus 505 to enable a user to interface with computing system. However, in certain embodiments, a physical keyboard and mouse may not be present, and the user may interact with the device solely through display 525 and/or a touchpad (not shown). Any type and combination of input devices may be used as a matter of design choice. In certain embodiments, no physical input device and/or display is present. For instance, the user may interact with computing system 500 remotely via another computing system in communication therewith, or computing system 500 may operate autonomously.

Memory 515 stores software modules that provide functionality when executed by processor(s) 510. The modules include an operating system 540 for computing system 500. The modules further include a long-running workflow module 545 that is configured to perform all or part of the processes described herein or derivatives thereof. Computing system 500 may include one or more additional functional modules 550 that include additional functionality.

One skilled in the art will appreciate that a "system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

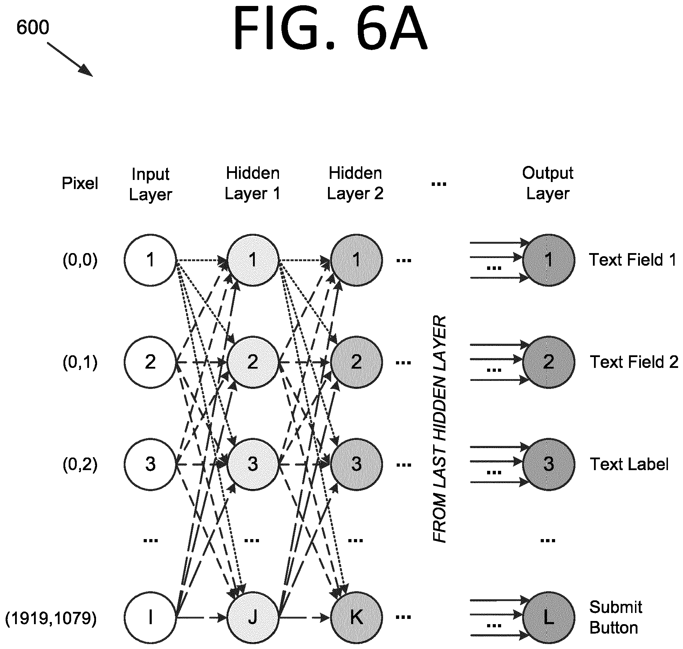

FIG. 6A illustrates an example of a neural network 600 that has been trained to recognize graphical elements in an image, according to an embodiment of the present invention. Here, neural network 600 receives pixels of a screenshot image of a 1920 × 1080 screen as input for input "neurons" 1 to I of the input layer. In this case, I is 2,073,600, which is the total number of pixels in the screenshot image.

Neural network 600 also includes a number of hidden layers. Both deep learning neural networks (DLNNs) and shallow learning neural networks (SLNNs) usually have multiple layers, although SLNNs may only have one or two layers in some cases, and normally fewer than DLNNs. Typically, the neural network architecture includes an input layer, multiple intermediate layers, and an output layer, as is the case in neural network 600.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 6A, pixels provided as the input layer are fed as inputs to the J neurons of hidden layer 1. While all pixels are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 receives inputs from hidden layer 1, hidden layer 3 receives inputs from hidden layer 2, and so on for all hidden layers until the last hidden layer provides its outputs as inputs for the output layer. It should be noted that numbers of neurons I, J, K, and L are not necessarily equal, and thus, any desired number of layers may be used for a given layer of neural network 600 without deviating from the scope of the invention. Indeed, in certain embodiments, the types of neurons in a given layer may not all be the same.

Neural network 600 is trained to assign a confidence score to graphical elements believed to have been found in the image. In order to reduce matches with unacceptably low likelihoods, only those results with a confidence score that meets or exceeds a confidence threshold may be provided in some embodiments. For instance, if the confidence threshold is 80%, outputs with confidence scores exceeding this amount may be used and the rest may be ignored. In this case, the output layer indicates that two text fields, a text label, and a submit button were found. Neural network 600 may provide the locations, dimensions, images, and/or confidence scores for these elements without deviating from the scope of the invention, which can be used subsequently by an RPA robot or another process that uses this output for a given purpose.

It should be noted that neural networks are probabilistic constructs that typically have a confidence score. This may be a score learned by the AI/ML model based on how often a similar input was correctly identified during training. For instance, text fields often have a rectangular shape and a white background. The neural network may learn to identify graphical elements with these characteristics with a high confidence. Some common types of confidence scores include a decimal number between 0 and 1 (which can be interpreted as a percentage of confidence), a number between negative $\infty$ and positive $\infty$, or a set of expressions (e.g., "low," "medium," and "high"). Various post-processing calibration techniques may also be employed in an attempt to obtain a more accurate confidence score, such as temperature scaling, batch normalization, weight decay, negative log likelihood (NLL), etc.

"Neurons" in a neural network are mathematical functions that that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

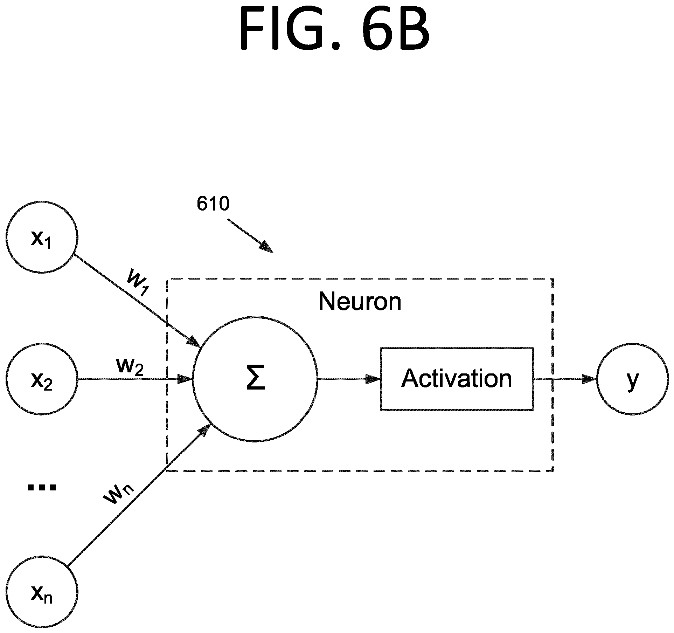

An example of a neuron 610 is shown in FIG. 6B. Inputs $x_1$, $x_2$, ... , $x_n$ from a preceding layer are assigned respective weights $w_1$, $w_2$, ... , $w_n$. Thus, the collective input from preceding neuron 1 is $w_1 x_1$. These weighted inputs are used for the neuron's summation function modified by a bias, such as:

$$\sum_{i=1}^{m} (w_i x_i) + bias \quad (1)$$

This summation is compared against an activation function $f(x)$ to determine whether the neuron "fires". For instance, $f(x)$ may be given by:

$$f(x) = \begin{cases} 1 \text{ if } \sum wx + bias \geq 0 \\ 0 \text{ if } \sum wx + bias < 0 \end{cases} \quad (2)$$

The output $y$ of neuron 710 may thus be given by:

$$y = f(x) \sum_{i=1}^{m} (w_i x_i) + bias \quad (3)$$

In this case, neuron 610 is a single-layer perceptron. However, any suitable neuron type or combination of neuron types may be used without deviating from the scope of the invention.

A goal, or "reward function," is often employed. In this example, the goal is the successful identification of graphical elements in the image. A reward function explores intermediate transitions and steps with both short term and long term rewards to guide the search of a state space and attempt to achieve a goal (e.g., successful identification of graphical elements, successful identification of a next sequence of activities for an RPA workflow, etc.).

During training, various labeled data (in this case, images) are fed through neural network 600. Successful identifications strengthen weights for inputs to neurons, whereas unsuccessful identifications weaken them. A cost function, such as mean square error (MSE) or gradient descent, may be used to punish predictions that are slightly wrong much less than predictions that are very wrong. If the performance of the AI/ML model is not improving after a certain number of training iterations, a data scientist may modify the reward function, provide indications of where non-identified graphical elements are, provide corrections of misidentified graphical elements, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input $x$ is processed through a series of $N$ nonlinear activity functions $f_i$ between each layer $i = 1, \ldots, N$ of the network, with the output at a given layer first multiplied by a synaptic matrix $W_i$, and with a bias vector $b_i$ added. The network output o, given by

$$o = f_N(W_N f_{N-1}(W_{N-1} f_{N-2}(\ldots f_1(W_1 x + b_1) \ldots) + b_{N-1}) + b_N) \quad (4)$$

In some embodiments, o is compared with a target output $t$, resulting in an error $E = \frac{1}{2}\|o - t\|^2$, which is desired to be minimized.

Optimization in the form of a gradient descent procedure may be used to minimize the error by modifying the synaptic weights $W_i$ for each layer. The gradient descent procedure requires the computation of the output o given an input $x$ corresponding to a known target output $t$, and producing an error $o - t$. This global error is then propagated backwards giving local errors for weight updates with computations similar to, but not exactly the same as, those used for forward propagation. In particular, the backpropagation step typically requires an activity function of the form $p_j(n_j) = f_j'(n_j)$, where $n_j$ is the network activity at layer $j$ (i.e., $n_j = W_j o_{j-1} + b_j$) where $o_j = f_j(n_j)$ and the apostrophe ' denotes the derivative of the activity function $f$.

The weight updates may be computed via the formulae:

$$d_j = \begin{cases} (o - t) \circ p_j(n_j), & j = N \\ W_{j+1}^T d_{j+1} \circ p_j(n_j), & j < N \end{cases} \quad (5)$$

$$\frac{\partial E}{\partial W_{j+1}} = d_{j+1}(o_j)^T \quad (6)$$

$$\frac{\partial E}{\partial b_{j+1}} = d_{j+1} \quad (7)$$

$$W_j^{new} = W_j^{old} - \eta \frac{\partial E}{\partial W_j} \quad (8)$$

$$b_j^{new} = b_j^{old} - \eta \frac{\partial E}{\partial b_j} \quad (9)$$

where ∘ denotes a Hadamard product (i.e., the element-wise product of two vectors), $^{T}$ denotes the matrix transpose, and $o_j$ denotes $f_j(W_j o_{j-1} + b_j)$, with $o_0 = x$. Here, the learning rate $\eta$ is chosen with respect to machine learning considerations. Below, $\eta$ is related to the neural Hebbian learning mechanism used in the neural implementation. Note that the synapses $W$ and $b$ can be combined into one large synaptic matrix, where it is assumed that the input vector has appended ones, and extra columns representing the $b$ synapses are subsumed to $W$.

The AI/ML model is trained over multiple epochs until it reaches a good level of accuracy (e.g., 97% or better using an F2 or F4 threshold for detection and approximately 2,000 epochs). This accuracy level may be determined in some embodiments using an F 1 score, an F2 score, an F4 score, or any other suitable technique without deviating from the scope of the invention. Once trained on the training data, the AI/ML model is tested on a set of evaluation data that the AI/ML model has not encountered before. This helps to ensure that the AI/ML model is not "over fit" such that it identifies graphical elements in the training data well, but does not generalize well to other images.

In some embodiments, it may not be known what accuracy level may be achieved. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model.

In certain embodiments, a collection of trained AI/ML models may be used to accomplish a task, such as employing an AI/ML model for each type of graphical element of interest (e.g., one for images, another for text fields, another for radio buttons, etc.), employing an AI/ML model to perform OCR, deploying yet another AI/ML model to recognize proximity relationships between graphical elements, employing still another AI/ML model to generate an RPA workflow based on the outputs from the other AI/ML models, etc. This may collectively allow the AI/ML models to enable semantic automation, for instance. CV and OCR may be performed using convolutional and/or recurrent neural networks (RNNs), for example.

Some embodiments may use transformer networks such as SentenceTransformers™, which is a Python™ framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

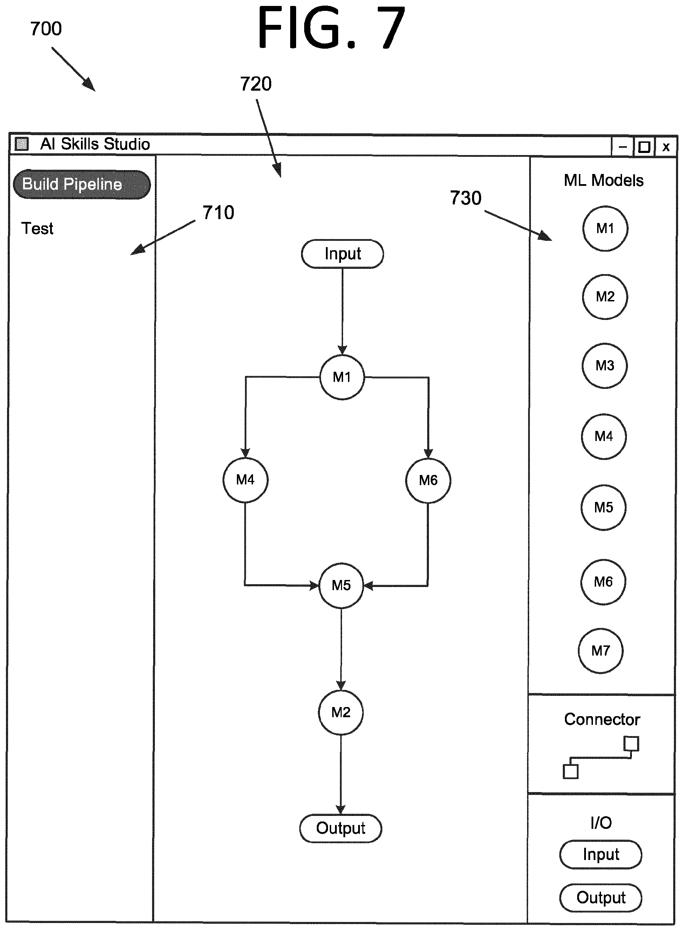

In some embodiments, an AI skills studio may be used to build machine learning pipelines. Such an AI skills studio 700 is shown in FIG. 7. AI skills studio 700 allows both technically advanced and citizen data scientists to build ML pipelines for data ingestion, preprocessing, (re)training, serving, and post-processing. Such functionality may be incorporated in an RPA designer application, providing the functionality needed by both RPA developers and data scientists in one application.

Using interface mode pane 710 users can choose to build an ML pipeline or test an existing ML pipeline. ML pipeline design pane 720 lets users drag ML components from ML component pane 730 to build the desired ML pipeline. For instance, users can define an input for the ML pipeline, the location of and flow between AI/ML models in the ML pipeline, and an output of the ML pipeline. In some embodiments, users may configure each component individually by clicking on it. ML pipeline flows may include AI/ML models connected in series, in parallel, or a combination thereof, as shown in FIG. 7.

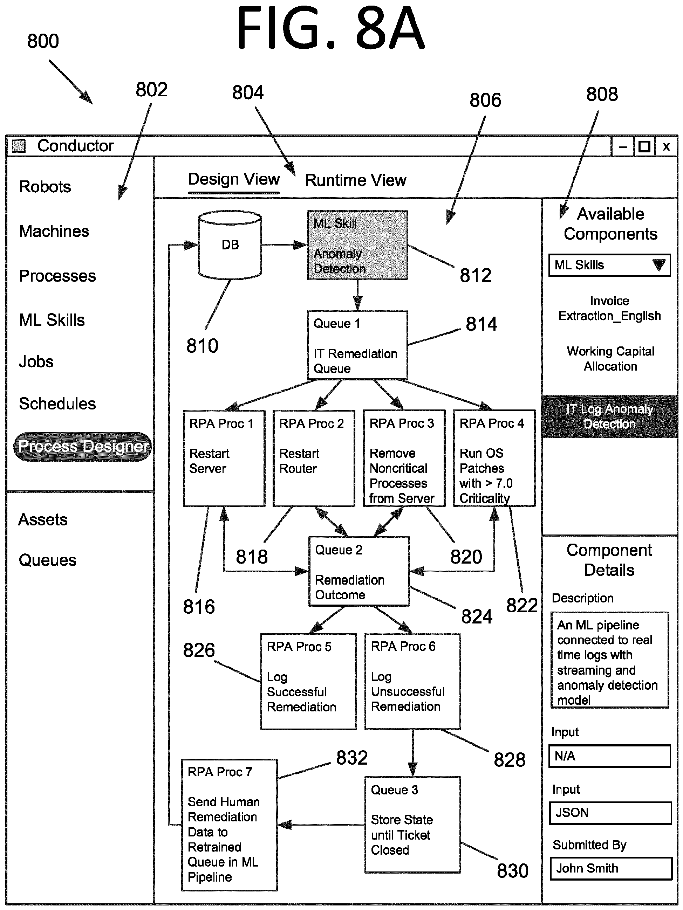

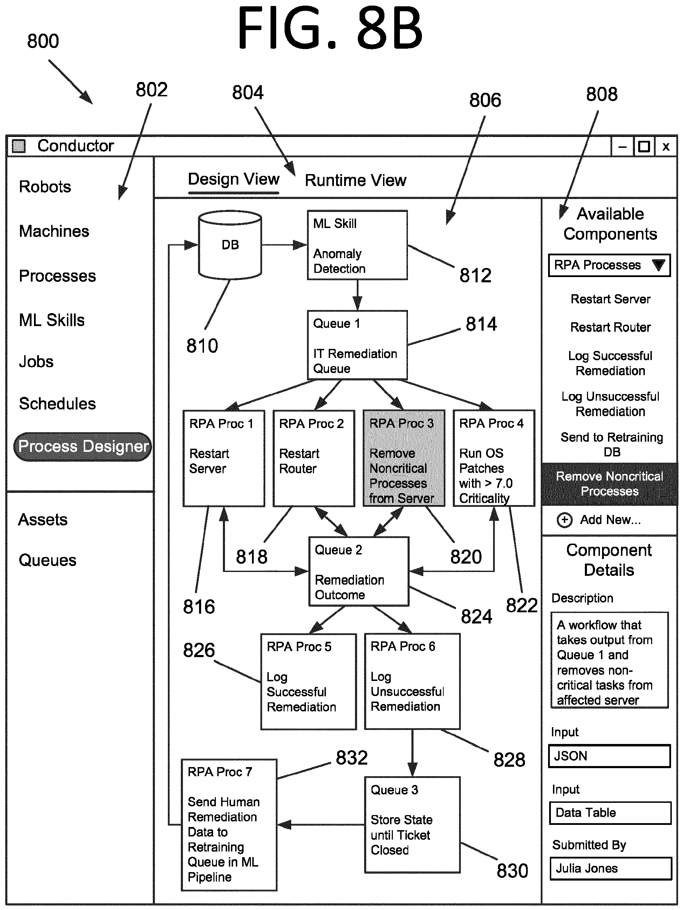

FIGS. 8A and 8B illustrate a design view of a process designer of a conductor application 800, according to an embodiment of the present invention. In this instance, an AI-enabled long-running workflow is implemented to perform anomaly detection for preventative maintenance in information technology (IT) operations. This view includes a task selection pane 802 where the user can choose views associated with robots, machines, processes, ML skills, jobs, schedules, process design, assets, and queues. ML skills are AI/ML models that can be plugged into the flow (e.g., by being dragged-and-dropped), potentially by users with no experience with AI. For instance, one ML skill may perform forecasting based on a set of earnings as input, another ML skill chained to that ML skill may take the forecasting as input and make a prediction for future sales, etc. Queues may be containers that potentially store multiple types of data made available between a robot and a conductor application, between two or more robots, etc. RPA processes are operations performed by RPA robots.

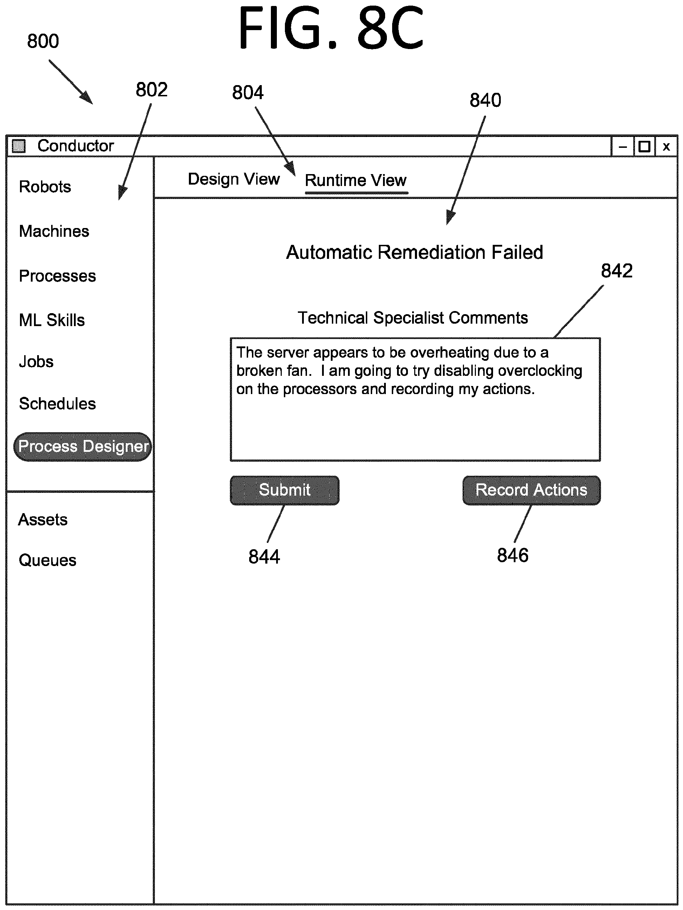

A view type menu 804 allows the user to select between a design view and a runtime view. The design view is shown in FIGS. 8A and 8B. The runtime view, on the other hand (see, for example, FIG. 8C), may run transparently if no input is expected, or may provide a place for a user to enter input if input is required and/or to display information or request assistance if an unexpected error occurs. In certain embodiments, human input may be requested if a confidence level of ML skill 812 falls below a certain amount. This may be facilitated by long-running workflows. A process designer pane 806 allows the user to drag components from a components pane 808 onto designer pane 806 and to interconnect them.

A database 810 (e.g., a Splunk™ real time log database) captures logs related to a relatively complex on-premises IT infrastructure. A data scientist creates an ML pipeline connecting a data streaming pipe to database 810 in a similar manner to that shown in FIG. 7 in some embodiments. It should be noted that while ML skill 812 is shown here, this could be abstracted to an ML pipeline, another workflow, etc. In certain embodiments, the chained ML skills may be added and shown in process designer pane 806. The ML pipeline feeds into an anomaly detection AI/ML model created in an AI skills studio, for example, such as AI skills studio 700 of FIG. 7 or UiPath AI Skills Studio™.

When an anomaly is detected by ML skill 812, an output thereof is passed to a first queue 814 (e.g., a UiPath® Queue). Based on the type of anomaly, first queue 814 could trigger one of many different workflows in some embodiments to attempt a common set of fixes to the anomaly detected by ML skill 812. In this example, the workflows (or RPA processes) 816, 818, 820, 822, when executed, produce an item for a second queue 824 that describes whether a successful or unsuccessful remediation occurred. Queue items can be any desired data type(s) without deviating from the scope of the invention. A conductor application, RPA robots, etc. may retrieve these data items from the queue and process them. Items may be pushed into queues using JSON in some embodiments.

If successful, an RPA process 826 for successful remediation is triggered that labels and sends data to a retraining datastore (not shown) to improve performance of the anomaly detection pipeline over time. However, if the remediation is unsuccessful, RPA process 828 for unsuccessful remediation is triggered that adds the item to a third queue 830 for unsuccessful results. The issue may be added to an IT service management (ITSM) system with a high priority and human remediation data may be received from the ITSM system and sent to the retraining datastore to improve performance of the anomaly detection pipeline via RPA process 832. These remediations that the ML pipeline was unable to deal with may be particularly beneficial for improving the accuracy of the ML pipeline during retraining.

In this case, the ML pipeline is at the beginning of the long-running process and triggers the subsequent workflows to be executed based on the output. However, ML pipelines may be included at any desired location in the long-running process without deviating from the scope of the invention. Indeed, in certain embodiments, multiple ML pipelines may be used in various locations.

In order to effectively incorporate AI/ML models into long-running workflows, a solution architect or process expert may first map out the end-to-end flow. This may be accomplished by first designing high level "tasks" that can then be assigned to RPA developers or data scientists to design and build the individual components. In FIG. 8A, anomaly detector ML skill 812 has been selected and its properties are shown in components pane 808. In FIG. 8B, RPA process 820 for removing noncritical processes from a server is selected and its properties are shown in components pane 808. Through this mechanism, users can configure individual components.

FIG. 8C illustrates a design view of process designer 800 of the conductor application, according to an embodiment of the present invention. In this embodiment, the runtime view may not need to prompt a human for input when the automatic remediation process is working. However, here, when the system could not automatically address the issue, a user input pane 840 prompts a technical specialist to provide comments in comments text box 842. The technical specialist can then submit the comments using submit button 844 and or instruct process designer 800 to record his or her remedial actions using record actions button 846. Recorded actions can then be saved in database 810 and used to retrain ML skill 812.

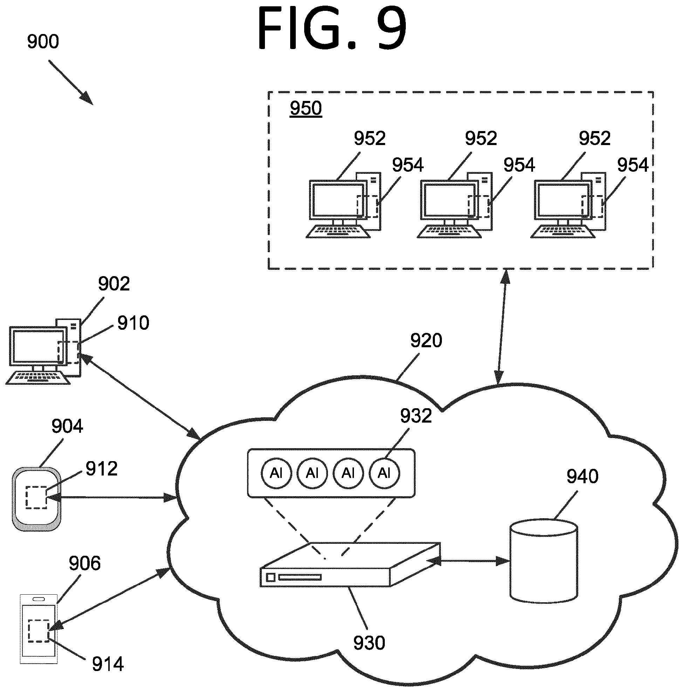

FIG. 9 is an architectural diagram illustrating a system 900 configured to use long-running workflows to build and manage AI flows, according to an embodiment of the present invention. System 900 includes user computing systems, such as desktop computer 902, tablet 904, and smart phone 906. However, any desired computing system may be used without deviating from the scope of invention including, but not limited to, smart watches, laptop computers, etc. Also, while three user computing systems are shown in FIG. 9, any suitable number of computing systems may be used without deviating from the scope of the invention. For instance, in some embodiments, dozens, hundreds, thousands, or millions of computing systems may be used.

Each computing system 902, 904, 906 has a respective RPA robot 910, 912, 914 executing all or a part of a long-running workflow that calls AI/ML model(s) in the performance of certain tasks (e.g., one or more of AI/ML models 932, either chained (e.g., in series, in parallel, or a combination thereof) or unchained). For example, one or more of RPA robots 910, 912, 914 may call AI/ML models that are trained to use CV to recognize what the user is doing on the respective computing system. Computing systems 902, 904, 906 send information, such as requests for execution of AI/ML models 932 and associated input information, via a network 920 (e.g., a local area network (LAN), a mobile communications network, a satellite communications network, the Internet, any combination thereof, etc.) to a server 930. In some embodiments, server 930 may be part of a public cloud architecture, a private cloud architecture, a hybrid cloud architecture, etc. In certain embodiments, server 930 may host multiple software-based servers on a single computing system 930. In some embodiments, server 930 may be implemented via one or more virtual machines (VMs). Server 930 includes AI/ML models 932 in this embodiment that are called by one or more of RPA robots 910, 912, 914 to provide information that assists the respective calling RPA robot in completing an automation. In some embodiments, AI/ML models 932 called by RPA robots 910 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to identify sequences of user interactions.

Server 930 runs a server session associated with the long-running workflow and computing systems 902, 904, 906 run their own client sessions. In some embodiments, multiple RPA robots 910, 912, 914 of computing systems 902, 904, 906 may be associated with the same long-running workflow, or the long-running workflow may be between one of RPA robots 910, 912, 914 and server 930. Separate server sessions may exist on server 930 for each long-running workflow.

By way of nonlimiting example, consider the case where a customer RPA robot 910 of computing system 902 is executing a long-running workflow that also requires action by a customer service RPA robot 912 of computing system 904. Customer RPA robot 910 may reach a point in its workflow that requires a response from customer service RPA robot 912. Customer RPA robot 910 then sends a request with the requisite information (e.g., a query regarding a bill with a copy of the bill attached) to customer service RPA robot 912 and waits. Customer service RPA robot 912 receives the request and calls an AI/ML model 932 via server 930 that performs document processing on the bill. Customer service RPA robot 912 then receives the document processing output from AI/ML model 932, determines a discrepancy in the bill and a solution, and sends this information to customer RPA robot 910. Customer RPA robot 910 then resumes its workflow with this information. This is just one example of many functions that are possible using long-running workflows.

Human reviewers may provide validation data to server 930 via a review application 952 on computing systems 950. For instance, human reviewers may validate that predictions by AI/ML models 932 are accurate or provide corrections otherwise. This dynamic input is then saved as training data for retraining AI/ML models 932, and may be stored in database 940 in some embodiments.

In some embodiments, multiple AI/ML models may be used. Each AI/ML model is an algorithm (or model) that runs on the data, and the AI/ML model itself may be a DLNN of trained artificial "neurons" that are trained in training data, for example. AI/ML models may be run in series, in parallel, or a combination thereof.

The AI/ML models may include, but are not limited to, a sequence extraction model, a clustering detection model, a visual component detection model, a text recognition model (e.g., OCR), an audio-to-text translation model, or any combination thereof. However, any desired number and type(s) of AI/ML models may be used without deviating from the scope of the invention. Using multiple AI/ML models may allow the system to develop a global picture of what is happening in the screens. For example, one AI/ML model could perform OCR, another could detect buttons, another could compare sequences, etc. Patterns may be determined individually by an AI/ML model or collectively by multiple AI/ML models.

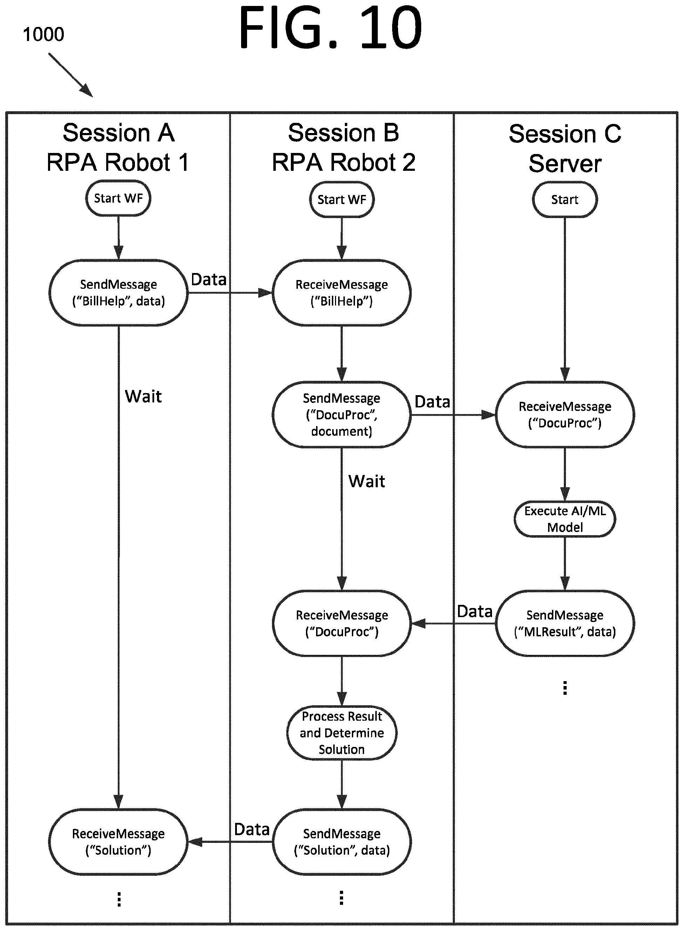

FIG. 10 is a flow diagram illustrating the flow 1000 of an example long-running workflow that uses AI, according to an embodiment of the present invention. RPA robot 1 is a customer robot in this embodiment that runs on a customer's computing system in session A. RPA robot 2 may be a customer service robot that runs on a customer service agent's computing system or potentially an unattended robot that automatically attempts to assist the customer. RPA robot 2 runs in session B. A server runs a process in session C (e.g., an RPA robot or another process) that listens for AI/ML model requests, causes AI/ML models to execute, and returns AI/ML model execution results.

In this example, which mirrors the example with respect to FIG. 9 above, a user has an issue with a bill. The customer provides information on the billing discrepancy and the file associated with the bill (e.g., a PDF file, an HTTP link to the bill, etc.) to RPA robot 1, which sends this information to RPA robot 2 via a SendMessage activity. RPA robot 1 then waits for a solution.

RPA robot 2 receives the information from RPA robot 1 via a ReceiveMessage activity (e.g., a listener activity that listens for requests) and relies on an AI/ML model to perform document processing. For instance, the AI/ML model may perform text recognition, determine the bill type and format, pull certain pertinent data from the bill, etc. RPA robot 2 sends the document or link, and potentially information regarding the issue from the customer, to the server via a SendMessage activity and waits. The server process (e.g., an RPA robot) receives this information from RPA robot 2 via a ReceiveMessage activity and causes the appropriate AI/ML model to execute using this information. The server process then sends the result from the AI/ML model to RPA robot 2, which processes the result either automatically or with the assistance of a customer service agent to determine a solution. The solution is then sent to RPA robot 1, which provides the solution to the customer.

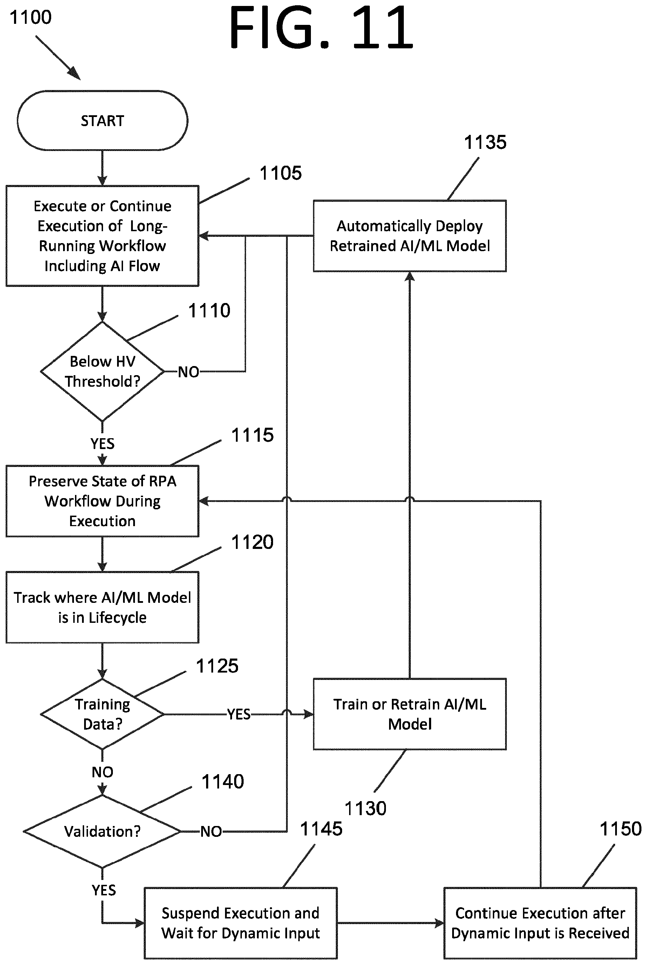

FIG. 11 is a flowchart illustrating a process 1100 for using long-running workflows to build and manage AI flows, according to an embodiment of the present invention. The process begins with executing a execute a long-running workflow via one or more RPA robots including an AI flow that calls an AI/ML model at 1105. RPA robot(s) executing the AI flow monitor confidence scores for predictions made by the AI/ML model and/or one or more other techniques that do not just rely on ML model confidence (which is often a distribution over a norm) for determining whether human review should be performed as part of step 1105 in this embodiment. These other techniques decouple potential inaccuracy of the AI/ML model confidence. These other techniques may also be able to monitor whether too many false positives are being received for AI/ML models that are outputting a high confidence score.

One such technique is to train a separate monitoring AI/ML model that transcends what the AI/ML models being monitored are doing. The monitoring AI/ML model may be trained to recognize patterns in the confidence scores output by the monitored AI/ML models and obtain a higher confidence score regarding whether the results of the monitored AI/ML models should be passed to a human. More specifically, the monitoring AI/ML model may be trained using predictions from the AI/ML models, to be monitored, the associated confidence scores, and the human validation results obtained during one or more human review periods for the AI/ML models to be monitored.

Another technique that may be used is to apply heuristic business rules that are probabilistic in nature. These may be based on statistical equations such as payment amounts over a time window (e.g., certain time periods tend to have higher and more important invoice amounts), submission volume trends (e.g., certain time periods tend to have more customer complaints), types of submissions (e.g., a certain type of complaint tends to be more likely to be incorrectly classified), etc. If the confidence score of the AI/ML model, the confidence provided by the one or more other techniques, or a combination thereof fall below a human validation threshold at 1110, process 1100 proceeds into the human review and retraining portion.

The monitoring techniques above may be able to monitor data drift (i.e., the data is changing such that the AI/ML model is becoming less accurate) and concept drift (i.e., the predictions made by the AI/ML model are becoming less accurate without changes in the data substantially contributing to the inaccuracy). These monitoring techniques may cause process 1100 to require human review as a stopgap measure while retraining data is collected. The AI/ML model can then be retrained with the goal being to increase the accuracy to a point that human review is no longer required.

In some embodiments, the long-running workflow includes one or more persistence activities that facilitate workflow fragmentation. If the AI/ML model has been previously trained, the current state of the RPA workflow with or without a trigger is saved at 1115 and where the AI/ML model is in an AI/ML model lifecycle is tracked at 1120. The state of the RPA workflow may include metadata for RPA robot(s) executing the RPA workflow, such as where the RPA robot is in the process (i.e., what activity the RPA robot is executing), the input for that activity (e.g., the input data and the trigger that kicked off that activity), and human validation data. In some embodiments, the state data may be stored where a conductor application is located (e.g., on a server) rather than where the RPA robot is executing.

The AI/ML model lifecycle in some embodiments includes initial training, serving operation with the initially trained AI/ML model, retraining of the AI/ML model, production operation of the retrained AI/ML model, and sending the AI/ML model back into a human review process if the accuracy of the AI/ML model falls below a threshold. Also, in some embodiments, step 1115 may be carried out to periodically save the state of the RPA workflow and the location in the long-running workflow based on a trigger. If training data has been received at 1125 (e.g., for initial training of the AI/ML model or retraining thereof) and retraining criteria are met (e.g., a certain amount of retraining data is collected, a certain number of examples are collected, a period of time passes, a human manually initiates retraining, etc.), the long-running workflow trains a replacement AI/ML model or retrains the AI/ML model at 1130, the new trained AI/ML model or the retrained AI/ML model is deployed at 1135, and execution of the long-running workflow continues at 1105. If the confidence of the newly trained or retrained AI/ML model and/or the one or more other techniques still does not exceed the human validation threshold at 1110, the human review and retraining portion of process 1100 may be repeated.

When the long-running workflow encounters an exception generated by the AI/ML model or otherwise requires human validation at 1140, execution of the long-running workflow is suspended and the one or more RPA robots wait for dynamic input pertaining to the required validation at 1145. After the dynamic input is received, execution of the long-running workflow continues at 1150. In some embodiments, resumption of execution of the long-running workflow is based on the saved state and location after the computing system is powered off, the computing system crashes, or processing resources are reallocated away from AI/ML model training or retraining.

The process steps performed in FIG. 11 may be performed by a computer program, encoding instructions for the processor(s) to perform at least part of the process(es) described in FIG. 11, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 510 of computing system 500 of FIG. 5) to implement all or part of the process steps described in FIG. 11, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

**Claims**

1. A system, comprising:

   a current artificial intelligence (AI) / machine learning (ML) model running on a computing system; and
   a robotic process automation (RPA) robot running on the same computing system as the current AI/ML model or on a different computing system, the RPA robot configured to:

   execute a long-running workflow comprising an AI flow that calls the current AI/ML model, and
   when a call is made to the current AI/ML model by the RPA robot and a confidence associated with the AI/ML model is below a human validation threshold:

   suspend execution of the long-running workflow and wait for dynamic input pertaining to the human validation,
   collect the dynamic input from the human validation, the dynamic input comprising training data, and
   continue execution of the long-running workflow after receiving the dynamic input.

2. The system of claim 1, wherein the RPA robot is further configured to:

   train a replacement AI/ML model or retrain the current AI/ML model using the collected dynamic input; and
   deploy the trained replacement AI/ML model or the retrained current AI/ML model for use in place of the current AI/ML model.

3. The system of claim 1, wherein the RPA robot is further configured to:

   preserve a state of the long-running workflow, wherein
   the state of the long-running workflow comprises what activity the RPA robot is executing, input for the activity, and human validation data.

4. The system of claim 3, wherein the RPA robot is further configured to:
   resume the long-running workflow based on the saved state after the computing system on which the RPA robot executes is powered off, the computing system crashes, or processing resources are reallocated away from a training replacement AI/ML model or retraining the current AI/ML model.

5. The system of claim 1, wherein the long-running workflow comprises one or more persistence activities that facilitate workflow fragmentation.

6. The system of claim 1, wherein the RPA robot is further configured to:

track where the current AI/ML model is in an AI/ML model lifecycle, wherein
the AI/ML model lifecycle comprises an initial training phase of an AI/ML model, a serving operation phase using the initially trained AI/ML model, a retraining phase of the AI/ML model prior to production operation, and a production operation phase when the retrained AI/ML model is deployed for production operation.

7. The system of claim 1, wherein the confidence associated with the current AI/ML model is a confidence score output by the current AI/ML model.

8. The system of claim 1, wherein

the confidence associated with the current AI/ML model is generated by a monitoring AI/ML model, and
the RPA robot is configured to call the monitoring AI/ML model and receive the confidence for the current AI/ML model from the monitoring AI/ML model.

9. The system of claim 1, wherein the RPA robot is configured to apply probabilistic business rules to obtain the confidence for the current AI/ML model.

10. The system of claim 1, wherein the RPA robot is configured to monitor data drift and concept drift of the current AI/ML model over time.

11. A non-transitory computer-readable medium storing a computer program, the computer program configured to cause at least one processor to:

execute a long-running workflow comprising an artificial intelligence (AI) flow that calls a current artificial intelligence (AI) / machine learning (ML) model;
determine a confidence associated with the current AI/ML model; and
when the confidence associated with the AI/ML model is below a human validation threshold:

suspend execution of the long-running workflow and wait for dynamic input pertaining to the human validation,
collect the dynamic input from the human validation, the dynamic input comprising training data, and
continue execution of the long-running workflow after receiving the dynamic input.

12. The non-transitory computer-readable medium of claim 11, wherein the computer program is further configured to cause the at least one processor to:

train a replacement AI/ML model or retrain the current AI/ML model using the collected dynamic input; and
deploy the trained replacement AI/ML model or the retrained current AI/ML model for use in place of the current AI/ML model.

13. The non-transitory computer-readable medium of claim 11, wherein the computer program is further configured to cause the at least one processor to:

preserve a state of the long-running workflow, wherein
the computer program is or comprises a robotic process automation (RPA) robot, and
the state of the long-running workflow comprises what activity the RPA robot is executing, input for the activity, and human validation data.

14. The non-transitory computer-readable medium of claim 13, wherein the computer program is further configured to cause the at least one processor to:
resume the long-running workflow based on the saved state after a computing system on which the RPA robot executes is powered off, the computing system crashes, or processing resources are reallocated away from a training replacement AI/ML model or retraining the current AI/ML model.

15. The non-transitory computer-readable medium of claim 11, wherein the computer program is further configured to cause the at least one processor to:

track where the current AI/ML model is in an AI/ML model lifecycle, wherein the AI/ML model lifecycle comprises an initial training phase of an AI/ML model, a serving operation phase using the initially trained AI/ML model, a retraining phase of the AI/ML model prior to production operation, and a production operation phase when the retrained AI/ML model is deployed for production operation.

16. The non-transitory computer-readable medium of claim 11, wherein the confidence associated with the current AI/ML model is a confidence score output by the current AI/ML model.

17. The non-transitory computer-readable medium of claim 11, wherein the confidence associated with the current AI/ML model is generated by a monitoring AI/ML model, and the computer program is configured to cause the at least one processor to call the monitoring AI/ML model and receive the confidence for the current AI/ML model from the monitoring AI/ML model.

18. The non-transitory computer-readable medium of claim 11, wherein the computer program is configured to cause the at least one processor to apply probabilistic business rules to obtain the confidence for the current AI/ML model.

19. The non-transitory computer-readable medium of claim 11, wherein the computer program is configured to cause the at least one processor to monitor data drift and concept drift of the current AI/ML model over time.

20. A computing system, comprising:

memory storing computer program instructions for executing a long-running workflow comprising an artificial intelligence (AI) flow that calls a current artificial intelligence (AI) / machine learning (ML) model; and at least one processor configured to execute the computer program instructions, wherein the computer program instructions are configured to cause the at least one processor to:

determine a confidence associated with the current AI/ML model, and when the confidence associated with the AI/ML model is below a human validation threshold:

suspend execution of the long-running workflow and wait for dynamic input pertaining to the human validation, and collect the dynamic input from the human validation, the dynamic input comprising training data.

21. The computing system of claim 20, wherein the computer program instructions are further configured to cause the at least one processor to:

train a replacement AI/ML model or retrain the current AI/ML model using the collected dynamic input; and deploy the trained replacement AI/ML model or the retrained current AI/ML model for use in place of the current AI/ML model.

22. The computing system of claim 20, wherein the computer program instructions are further configured to cause the at least one processor to:

preserve a state of the long-running workflow, wherein the computer program instructions are or comprise a robotic process automation (RPA) robot, and the state of the long-running workflow comprises what activity the RPA robot is executing, input for the activity, and human validation data.

23. The computing system of claim 22, wherein the computer program instructions are further configured to cause the at least one processor to:
resume the long-running workflow based on the saved state after a computing system on which the RPA robot executes is powered off, the computing system crashes, or processing resources are reallocated away from a training replacement AI/ML model or retraining the current AI/ML model.

24. The computing system of claim 20, wherein the computer program instructions are further configured to cause the at least one processor to:

track where the current AI/ML model is in an AI/ML model lifecycle, wherein the AI/ML model lifecycle comprises an initial training phase of an AI/ML model, a serving operation phase using the initially trained AI/ML model, a retraining phase of the AI/ML model prior to production operation, and a production operation phase when the retrained AI/ML model is deployed for production operation.

25. The computing system of claim 20, wherein the confidence associated with the current AI/ML model is a confidence score output by the current AI/ML model.

26. The computing system of claim 20, wherein

the confidence associated with the current AI/ML model is generated by a monitoring AI/ML model, and the computer program instructions are configured to cause the at least one processor to call the monitoring AI/ML model and receive the confidence for the current AI/ML model from the monitoring AI/ML model.

27. The computing system of claim 20, wherein the computer program instructions are configured to cause the at least one processor to apply probabilistic business rules to obtain the confidence for the current AI/ML model.

28. The computing system of claim 20, wherein the computer program instructions are configured to cause the at least one processor to monitor data drift and concept drift of the current AI/ML model over time.

# FIG. 1

100

# FIG. 2

200

# FIG. 3

300

Designer

310

320 — User-Defined Activities

330 — UI Automation Activities

340 — Drivers

AI/ML Models

350

340

| OS | Browser | VM | Enterprise |

342     344     346     348

# FIG. 4

400

410

| Robot | Robot | Robot | Robot | Robot |

Conductor 420

430 DB Server

Indexer Server 440

# FIG. 5

500

# FIG. 6A

600

# FIG. 6B

610

$x_1$

$w_1$

$x_2$

$w_2$

$\cdots$

$w_n$

$x_n$

Neuron

$\Sigma$

Activation

y

# FIG. 7

700

720

# FIG. 8A

800

802    804              806        808

# FIG. 8B

800

802    804    806    808

**Conductor**    — □ x

| | |
|---|---|
| Robots | Design View   Runtime View |
| Machines | |
| Processes | |
| ML Skills | |
| Jobs | |
| Schedules | |
| **Process Designer** | |
| Assets | |
| Queues | |

Available Components

RPA Processes ▼

Restart Server

Restart Router

Log Successful Remediation

Log Unsuccessful Remediation

Send to Retraining DB

**Remove Noncritical Processes**

⊕ Add New...

DB — ML Skill / Anomaly Detection — 812

810

Queue 1 / IT Remediation Queue — 814

| RPA Proc 1 Restart Server | RPA Proc 2 Restart Router | RPA Proc 3 Remove Noncritical Processes from Server | RPA Proc 4 Run OS Patches with > 7.0 Criticality |
|---|---|---|---|

818    Queue 2 / Remediation Outcome    820

816    824    822

826

| RPA Proc 5 Log Successful Remediation | RPA Proc 6 Log Unsuccessful Remediation |
|---|---|

832    828

RPA Proc 7 / Send Human Remediation Data to Retraining Queue in ML Pipeline

Queue 3 / Store State until Ticket Closed — 830

**Component Details**

Description

A workflow that takes output from Queue 1 and removes non-critical tasks from affected server

Input

JSON

Input

Data Table

Submitted By

Julia Jones

# FIG. 8C

800

802    804                                    840

| Conductor | − □ x |

**Robots**

**Machines**

**Processes**

**ML Skills**

**Jobs**

**Schedules**

Process Designer

**Assets**

**Queues**

Design View    Runtime View

Automatic Remediation Failed

842

Technical Specialist Comments

The server appears to be overheating due to a
broken fan.  I am going to try disabling overclocking
on the processors and recording my actions.

Submit          Record Actions

844             846

# FIG. 9

# FIG. 10

1000

| Session A<br>RPA Robot 1 | Session B<br>RPA Robot 2 | Session C<br>Server |
|---|---|---|
| Start WF | Start WF | Start |
| SendMessage<br>("BillHelp", data) | ReceiveMessage<br>("BillHelp") | |
| Wait | SendMessage<br>("DocuProc",<br>document) | ReceiveMessage<br>("DocuProc") |
| | Wait | Execute AI/ML<br>Model |
| | ReceiveMessage<br>("DocuProc") | SendMessage<br>("MLResult", data) |
| | Process Result<br>and Determine<br>Solution | |
| ReceiveMessage<br>("Solution") | SendMessage<br>("Solution", data) | |

Data (BillHelp → ReceiveMessage)
Data (DocuProc → ReceiveMessage)
Data (MLResult → ReceiveMessage)
Data (Solution → ReceiveMessage)

# FIG. 11

1100

START

Execute or Continue
Execution of Long-
Running Workflow
Including AI Flow
— 1105

1135

Automatically Deploy
Retrained AI/ML Model

Below HV
Threshold?
— 1110

NO

YES

Preserve State of RPA
Workflow During
Execution
— 1115

Track where AI/ML Model
is in Lifecycle
— 1120

Training
Data?
— 1125

YES

Train or Retrain AI/ML
Model

1130

NO

Validation?
— 1140

NO

1145

YES

Suspend Execution and
Wait for Dynamic Input

Continue Execution after
Dynamic Input is Received
1150

Europäisches
Patentamt

European
Patent Office

Office européen
des brevets

**EUROPEAN SEARCH REPORT**

Application Number

EP 22 20 3312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/133816 A1 (SONI SOUJANYA [IN] ET AL) 30 April 2020 (2020-04-30) * abstract; claims 1-20; figures 1-8 * * paragraph [0002] – paragraph [0047] * ----- | 1-15 | INV. G06N20/00 G06F9/48 |
| A | COSTA ALBERT FRANCA JOSUA ET AL: "A Drift Detection Method Based on Active Learning", 2018 INTERNATIONAL JOINT CONFERENCE ON NEURAL NETWORKS (IJCNN), IEEE, 8 July 2018 (2018-07-08), pages 1-8, XP033419173, DOI: 10.1109/IJCNN.2018.8489364 [retrieved on 2018-10-10] * the whole document * ----- | 1-15 | ADD. G06N3/04 G06N3/084 |
| A | US 2021/109503 A1 (SINGH PRABHDEEP [US] ET AL) 15 April 2021 (2021-04-15) * the whole document * ----- | 1-15 | |
| A | US 2021/042126 A1 (PERERA CHARITH J [US] ET AL) 11 February 2021 (2021-02-11) * the whole document * ----- | 1-15 | TECHNICAL FIELDS SEARCHED (IPC) G06N G06F |
| A | US 2021/107141 A1 (SHRIVASTAVA SHASHANK [IN] ET AL) 15 April 2021 (2021-04-15) * the whole document * ----- | 1-15 | |

-/--

The present search report has been drawn up for all claims

| Place of search | Date of completion of the search | Examiner |
|---|---|---|
| The Hague | 4 October 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

**Application Number**

EP 22 20 3312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GAO JUNXIONG ET AL: "Automated Robotic Process Automation: A Self-Learning Approach", 11 October 2019 (2019-10-11), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 95 – 112, XP047534041, [retrieved on 2019-10-11] * the whole document * | 1-15 | |
| A | TURNER CHRISTOPHER J ET AL: "Human in the Loop: Industry 4.0 Technologies and Scenarios for Worker Mediation of Automated Manufacturing", IEEE ACCESS, IEEE, USA, vol. 9, 26 July 2021 (2021-07-26), pages 103950-103966, XP011867773, DOI: 10.1109/ACCESS.2021.3099311 [retrieved on 2021-07-29] * the whole document * | 1-15 | |
| X,P | US 2022/024032 A1 (SINGH PRABHDEEP [US] ET AL) 27 January 2022 (2022-01-27) * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 4 October 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**

## ANNEX TO THE EUROPEAN SEARCH REPORT
## ON EUROPEAN PATENT APPLICATION NO.

EP 22 20 3312

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | | Publication date | Patent family member(s) | | Publication date |
|---|---|---|---|---|---|
| US 2020133816 | A1 | 30-04-2020 | AU 2019229462 | A1 | 14-05-2020 |
| | | | US 2020133816 | A1 | 30-04-2020 |
| US 2021109503 | A1 | 15-04-2021 | CN 114556245 | A | 27-05-2022 |
| | | | EP 4046113 | A1 | 24-08-2022 |
| | | | JP 2022552465 | A | 16-12-2022 |
| | | | KR 20220079831 | A | 14-06-2022 |
| | | | US 2021109503 | A1 | 15-04-2021 |
| | | | US 2022035343 | A1 | 03-02-2022 |
| | | | WO 2021076227 | A1 | 22-04-2021 |
| US 2021042126 | A1 | 11-02-2021 | NONE | | |
| US 2021107141 | A1 | 15-04-2021 | NONE | | |
| US 2022024032 | A1 | 27-01-2022 | CN 115996823 | A | 21-04-2023 |
| | | | JP 2023536063 | A | 23-08-2023 |
| | | | US 2022024032 | A1 | 27-01-2022 |
| | | | WO 2022019934 | A1 | 27-01-2022 |

EPO FORM P0459

For more details about this annex : see Official Journal of the European Patent Office, No. 12/82